**Europäisches Patentamt**

**European Patent Office**

**Office européen des brevets**

(11) Veröffentlichungsnummer: **0 169 268**
A2

(12) # EUROPÄISCHE PATENTANMELDUNG

(21) Anmeldenummer: **84111084.4**

(22) Anmeldetag: **17.09.84**

(51) Int. Cl.⁴: **B 60 R 19/56**

(30) Priorität: **17.07.84 DE 8421375 U**

(43) Veröffentlichungstag der Anmeldung:
**29.01.86 Patentblatt 86/5**

(84) Benannte Vertragsstaaten:
**BE DE LU NL**

(71) Anmelder: **Karl Kässbohrer Fahrzeugwerke GmbH**
**Kässbohrerstrasse**
**D-7900 Ulm (Donau)(DE)**

(72) Erfinder: **Schall, Hans**
**Martinstrasse 17**
**D-7906 Blaustein(DE)**

(74) Vertreter: **Patentanwälte Grünecker, Dr. Kinkeldey, Dr.**
**Stockmair, Dr. Schumann, Jakob, Dr. Bezold, Meister,**
**Hilgers, Dr. Meyer-Plath**
**Maximilianstrasse 58**
**D-8000 München 22(DE)**

(54) **Zu einer Laderampe verschwenkbarer Unterfahrschutz.**

(57) Die Erfindung betrifft ein Fahrzeug mit mindestens einem auf seinem Chassis angeordneten und mit Containerhalterungen befestigten Container. An dem Fahrzeugheck ist ein sich in einer Fahrtstellung nach unten erstreckender Unterfahrschutz angebracht. Um einerseits auch kleinere Container sicher zu befördern und andererseits diese auch einfache be- und entladen zu können, ist der Container mit Abstand zum Fahrzeugheck in den Containerhalterungen gehalten. Der Unterfahrschutz ist an dem Chassis aus der Fahrtstellung in eine Ladestellung überführbar angelenkt. In der Ladestellung überbrückt er den Abstand zwischen Container und dem Fahrzeugheck als Überfahrrampe.

EP 0 169 268 A2

./...

Fig.1

GRUNECKER, KINKELDEY, STOCKMAIR & PARTNER

PATEN
EUROPEAN PATENT ATTORNEYS

A GRUNECKER DR ING
DR H KINKELDEY DPL ING
DR W STOCKMAIR DR ING AE S (CALTECH)
DR K SCHUMANN DPL PHYS
P H JAKOB DPL ING
DR G BEZOLD DPL CHEM
W MEISTER DPL ING
H HILGERS DPL ING
DR H MEYER-PLATH DPL ING

8000 MÜNCHEN 22
MAXIMILIANSTRASSE 43

**0169268**

Fahrzeug mit mindestens einem auf seinem Chassis
angeordneten, mit Containerhalterungen befestigten
Container

## B e s c h r e i b u n g

Die Erfindung betrifft ein Fahrzeug mit mindestens einem
auf seinem Chassis angeordneten, mit Containerhalterungen
befestigten Container und am Fahrzeugheck angebrachten,
sich in einer Fahrtstellung nach unten erstreckenden
Unterfahrschutz.

Solche Fahrzeuge sind zum Beispiel als Sattelanhänger
bereits seit längerem bekannt. Bei diesen Fahrzeugen
schließt der Container in etwa bündig mit dem Fahrzeugheck ab, um so das Beladen des Containers an einer Laderampe zu ermöglichen. Mit diesen Fahrzeugen sind jedoch
nur bestimmte Containergrößen zu transportieren, da
aus Gründen der Fahrsicherheit die Zugmaschine richtig ausgelastet sein Soll. Dieser Nachteil kommt vor allen
Dingen beim Transport kürzerer Container zum Tragen.

Es ist daher Aufgabe der vorliegenden Erfindung, ein Fahrzeug der genannten Gattung so zu verbessern, daß bei einer
sicheren Handhabung des Fahrzeuges ein einfaches Be- und
Entladen, insbesondere auch bei kürzeren Containern ermöglicht wird.

Diese Aufgabe wird erfindungsgemäß dadurch gelöst, daß
der Container mit Abstand zum Fahrzeugheck in den Containerhalterungen gehaltert ist und der Unterfahrschutz
an dem Chassis aus der Fahrtstellung in eine Ladestellung
überführbar angelenkt ist,in welcher er den Abstand zwischen
dem Container und dem Fahrzeugheck als Überfahrrampe überbrückt.

Diese Lösung fördert ein sicheres Fahrverhalten des Fahrzeuges dadurch, daß nunmehr der Schwerpunkt des Containers
weiter vorne liegt. Gleichzeitig ermöglicht jedoch die
den Zwischenraum zwischen dem Container und dem bei Be- und
Entladung des Containers an einer Laderampe befindlichen
Fahrzeughecks überbrückende Überfahrrampe ein einfaches
Be- bzw. Entladen des Containers. Dabei kann die Luftfeder
der Hinterachse des Fahrzeuges eine Höhenanpassung der
Überfahrrampe an die Laderampe bewirken, so daß der Container
mittels Gabelstapler oder mit Rollen versehenen Paletten
schnell und einfach beladen werden kann.

Es ist vorteilhaft,wenn der Unterfahrschutz an dem Chassis
in einem horizontalen Scharnier schwenkbar gelagert ist.
Dann kann nämlich der Unterfahrschutz um etwa 270° um das
Fahrzeugheck herum auf das Chassis zwischen den Container
und das Fahrzeugheck geschwenkt werden, so daß die Rückseite des Unterfahrschutzes als Oberseite der Überfahrrampe
dient.

Für das Befahren der Überfahrrampe mit Fahrzeugen ist es günstig, daß der Unterfahrschutz eine in Ladestellung geschlossene im wesentlichen glatte Oberseite aufweist.

Um die Überbrückung des Zwischenraumes zwischen dem Container und der Laderampe ohne größere Stufen zu verbessern, kann der Unterfahrschutz an seinem dem Scharnier abgewandten Ende einen flachen, über die Oberseite des in Ladestellung befindlichen Unterfahrschutzes hinausragenden und etwa der Breite des Unterfahrschutzes entsprechenden Steg zur Auflage auf dem Containerinnenboden aufweisen.

Im folgenden wird ein Ausführungsbeispiel der Erfindung anhand von Zeichnungen näher erläutert. Es zeigen:

Fig. 1    eine Seitenansicht des erfindungsgemäßen Fahrzeuges und

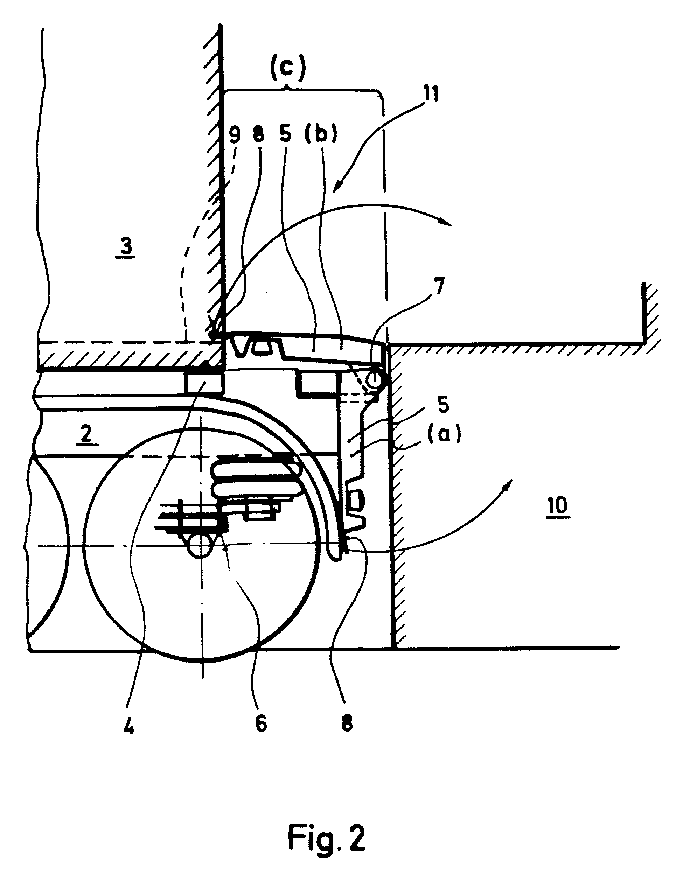

Fig. 2    in einer vergrößerten Seitenansicht ausschnittweise das Heck des erfindungsgemäßen Fahrzeuges an einer Laderampe.

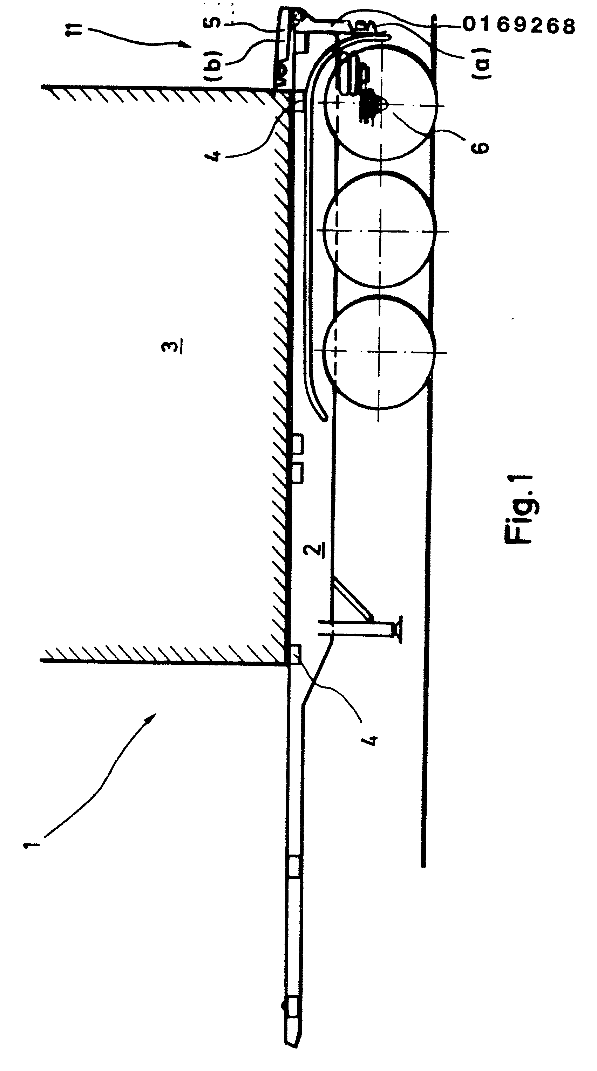

Wie am besten aus Fig. 1 ersichtlich, umfaßt das Fahrzeug 1 ein Chassis 2 und einen Container 3. Der Container 3 liegt mit einem gewissen Abstand c vom Heck des Fahrzeuges 1 auf dem Chassis 2 auf und wird durch an dem Chassis 2 vorgesehene Containerhalterungen 4 gehalten.

Am Heck des Fahrzeuges 1 ist an dem Chassis 2 ein Unterfahrschutz 5 angebracht. Weiterhin ist das Fahrzeug mit höhenverstellbaren Luftfederachsen 6 versehen. Der Unterfahrschutz 5 ist mittels eines horizontalen Scharniers 7 schwenkbar an dem Chassis 2 angelenkt. In einer Fahrtstellung a erstreckt sich der Unterfahrschutz von dem horizontalen Scharnier 7 in etwa senkrecht nach unten.

Der Unterfahrschutz 5 läßt sich um ca. 270° um das Heck des Fahrzeugs 1 herum in eine Ladestellung b klappen. Die in der Ladestellung b nach oben weisende Oberseite des Unterfahrschutzes 5 stellt eine geschlossene, im wesentlichen glatte Fläche dar. An dem dem Scharnier 7 abgewandten Ende des Unterfahrschutzes 5 ragt ein flacher Steg 8 über. Der Steg 8 liegt in der gleichen Ebene wie die Oberseite des Unterfahrschutzes 5 und weist im wesentlichen auch dessen Breite auf.

Im folgenden wird die Wirkungsweise der Erfindung beschrieben. Kleinere Container 3, deren Länge nicht ausreicht, um den Schwerpunkt des Fahrzeuges 1 weit genug nach vorne zu legen, werden mit Abstand c vom Heck des Fahrzeuges 1 auf das Chassis 2 geladen und durch die Containerhalterungen 4 in einer vorbestimmten Position gehalten. Dadurch liegt der Schwerpunkt des Fahrzeuges weiter vorne, als wenn der Container 3 bündig mit dem Heck des Fahrzeuges 1 abschließen würde. Das bewirkt eine richtige Auslastung der Zugmaschine.

Zum Be- und Entladen des Containers 3 wird nun zunächst der Unterfahrschutz 5 um ca. 270° um das Heck herum aus der Fahrtstellung a in die Ladestellung b geschwenkt. Dies geschieht bei offenen Türen des Containers, so daß der Steg 8 des Unterfahrschutzes auf dem Containerinnenboden 9 aufliegt. Anschließend wird das Fahrzeug rückwärts an eine Laderampe 10 herangesetzt. Mit Hilfe der höhenverstellbaren Luftfederachsen 6 erfolgt die Höhenanpassung der Oberseite des sich nun in der Ladestellung b befindlichen Unterfahrschutzes 5 an die Oberkante der Laderampe 10. Dadurch befindet sich jetzt die Bodeninnenfläche 9 mit der Laderampe 10 auf einer Höhe, ohne daß dazwischen ein Höhenunterschied bzw. eine Stufe zu überwinden wäre. Der Container kann in dieser Position be- und entladen werden, wobei auch z.B. mit Rollen versehene Paletten ohne Schwierigkeiten von der Laderampe 10 ins Innere des Containers 3 verbracht werden können.

Nach dem Be- bzw. Entladen des Containers wird das Fahrzeug 1 von der Laderampe 10 weggesetzt, und der Unterfahrschutz 5 aus der Ladestellung b in die Fahrtstellung a zurückgeschwenkt. Nach Schließen der Türen des Containers 3 ist der Be- bzw. Entladevorgang abgeschlossen.

GRUNECKER. KINKELDEY. STOCKMAIR & PARTNER

PATE. **0169268**

EUROPEAN PATENT ATTORNEYS

A GRUNECKER. DR ING
DR H KINKELDEY DR ING
DR W STOCKMAIR DR ING AE E CALTECH
DR K SCHUMANN DR RER NAT
P H JAKOB DIPL ING
DR G BEZOLD DR RER NAT
W MEISTER DR ING
H HILGERS DR ING
DR H MEYER-PLATH DR ING

8000 MÜNCHEN 22
MAXIMILIANSTRASSE 58

Karl Kässbohrer

Fahrzeugwerke GmbH

7900 U l m

EP 1964 - 80/RO

### Fahrzeug mit mindestens einem auf seinem Chassis angeordneten, mit Containerhalterungen befestigten Container

## S c h u t z a n s p r ü c h e

1. Fahrzeug mit mindestens einem auf seinem Chassis angeordneten, mit Containerhalterungen befestigten Container und am Fahrzeugheck angebrachten, sich in einer Fahrtstellung nach unten erstreckenden Unterfahrschutz, dadurch g e k e n n z e i c h n e t , daß der Container (3) mit Abstand zum Fahrzeugheck (11) in den Containerhalterungen (4) gehaltert ist und der Unterfahrschutz (5) an dem Chassis (2) aus der Fahrtstellung (a) in eine Ladestellung (b) überführbar angelenkt ist, in welcher er den Abstand zwischen dem Container (3) und dem Fahrzeugheck (11) als Überfahrrampe überbrückt.

2. Fahrzeug nach Anspruch 1, dadurch g e k e n n z e i c h n e t , daß der Unterfahrschutz (5) an dem Chassis (2) in einem horizontalen Scharnier (7) schwenkbar gelagert ist.

3. Fahrzeug nach Anspruch 2, dadurch g e k e n n z e i c h -
n e t , daß der Unterfahrschutz (5) eine in Ladestellung
(b) geschlossene, im wesentlichen glatte Oberseite aufweist.

4. Fahrzeug nach Anspruch 3, dadurch g e k e n n -
z e i c h n e t , daß der Unterfahrschutz (5) an seinem
dem Scharnier (7) abgewandten Ende einen flachen über
die Oberseite des in Ladestellung (b) befindlichen Unterfahrschutzes (5) hinausragenden und etwa der Breite des
Unterfahrschutzes (5) entsprechenden Steg (8) zur Auflage
auf dem Containerinnenboden (9) aufweist.

Fig. 1

0169268

Fig. 2